# FASCICULE DE BREVET EUROPEEN

(11) **EP 2 989 170 B1**
(45) Date de publication et mention de la délivrance du brevet: **22.05.2019**
(21) Numéro de dépôt: 14720674.2
(22) Date de dépôt: 10.04.2014
(51) Int. Cl.: C09D 201/00, C09J 201/00, C08G 83/00, C08G 63/12, C08G 63/42, B32B 7/12

(54) **STRUCTURE MULTICOUCHE COMPORTANT UNE COUCHE DE MATÉRIAU SUPRAMOLECULAIRE ET SON PROCÉDÉ DE FABRICATION**
MEHRSCHICHTIGE STRUKTUR MIT EINER SCHICHT AUS EINEM SUPRAMOLEKULAREN MATERIAL UND VERFAHREN ZUR HERSTELLUNG DAVON
MULTILAYER STRUCTURE COMPRISING A LAYER OF SUPRAMOLECULAR MATERIAL AND METHOD FOR THE PRODUCTION THEREOF

(30) Priorité: 26.04.2013 FR 1353890
(43) Date de publication de la demande: 02.03.2016
(73) Titulaire: Arkema France, 92700 Colombes (FR)
(72) Inventeur: DISSON, Jean-Pierre, F-69390 Vernaison (FR); VAN HEMELRYCK, Bruno, F-69630 Chaponost (FR)
(74) Mandataire: Bonnel, Claudine
(86) Numéro de dépôt international: PCT/FR2014/050858
(87) Numéro de publication internationale: WO 2014/174174

(56) Documents cités:
- EP-A1- 2 236 541
- EP-A2- 0 167 455
- WO-A1-2010/112743
- WO-A1-2012/152859
- JP-A- 2005 097 874
- CHABERT F ET AL: "Supramolecular polymer for enhancement of adhesion and processability of hot melt polyamides", INTERNATIONAL JOURNAL OF ADHESION AND ADHESIVES, ELSEVIER, AMSTERDAM, NL, vol. 30, no. 8, 24 août 2010 (2010-08-24), pages 696-705, XP027394825, ISSN: 0143-7496 [extrait le 2010-08-24]

## Description

### DOMAINE DE L'INVENTION

L'invention se rapporte à une structure multicouche associant au moins une couche de matériau supramoléculaire à une couche de matériau rigide, et à son procédé de fabrication. L'invention a plus particulièrement pour objet les utilisations d'une telle structure, notamment pour des applications où un amortissement des chocs, des vibrations et/ou des ondes sonores est recherché, par exemple pour fabriquer des engins de locomotion, tels qu'automobiles, ferroviaires, nautiques, aéronautiques ou aérospatiales, ou encore pour le bâtiment.

### ARRIERE-PLAN TECHNIQUE

De nombreuses applications font appel à des structures multicouches associant au moins une couche de matériau élastomère à une ou plusieurs couches de matériaux rigides, pour conférer à la structure une capacité d'amortissement. On peut citer à ce titre des patins d'amortisseurs pour moteurs, des couches d'élastomères appliquées sur des tôles, par exemple pour des capots d'automobiles ou de carters.

Les matériaux élastomères sont généralement élaborés à partir de masses pâteuses ou solides viscoélastiques et n'acquièrent leur propriété d'amortissement qu'après réticulation ou vulcanisation. Il est de ce fait difficile de fabriquer des structures multicouches comportant une couche de matériau élastomère étalée de façon homogène et continue. Outre l'aspect esthétique, la présence de bulles d'air dans la couche élastomère est susceptible de fragiliser la structure. Des techniques classiques comme le moulage par injection sont peu adaptées à la fabrication de pièces de géométrie complexe.

Qui plus est, la fabrication de structures multicouches amortissantes requiert habituellement un grand nombre d'étapes : sont généralement nécessaires au moins une étape de moulage d'une pièce en élastomère non réticulé de la géométrie souhaitée, une étape de réticulation ou de vulcanisation de cette pièce et une étape d'assemblage de cette pièce avec la ou les autres pièces de la structure. L'étape d'assemblage, qui est le plus souvent effectuée par collage, est une opération critique, puisqu'elle conditionne la résistance ultérieure de la structure : elle nécessite d'effectuer une première étape de préparation de la surface des pièces à assembler, par exemple par dégraissage, sablage ou attaque chimique, une deuxième étape consistant en l'application d'un primaire d'accrochage, et enfin une troisième étape d'application d'une colle adéquate. Par ailleurs, la présence de couches intermédiaires, comme le primaire d'accrochage et la colle, entre le matériau élastomère et les autres matériaux constitutifs de la structure, sont susceptibles de considérablement réduire l'efficacité amortissante du système.

Alternativement, la masse pâteuse d'élastomère non réticulée peut être appliquée sur les surfaces à traiter puis l'ensemble mis à cuire sous presse, mais cette technique ne permet pas de combler des interstices difficiles d'accès.

Il existe bien certains matériaux élastomères, comme les polyuréthanes, qui présentent l'avantage de pouvoir être mis en oeuvre à l'état liquide, et donc de facilement remplir les moules pour fabriquer des pièces de géométrie complexe, mais ce sont des systèmes très réactifs et requérant l'utilisation d'équipements de protection lors de leur mise en oeuvre du fait de la toxicité de certains réactifs.

Un autre problème réside dans le manque d'adhérence et de mouillabilité des matériaux élastomères conventionnels, qui est à l'origine d'une rupture prématurée de la structure à l'interface entre le matériau élastomère et les autres matériaux qui la constituent.

Par ailleurs une fois les élastomères classiques endommagés par des déchirures ou des microfissures, leur utilisation en amortissement peut être considérablement altérée, ce qui nécessite des opérations de démontage et de réparation.

Enfin, les structures multicouches connues ne procurent pas, ou du moins pas dans la durée, un potentiel d'amortissement suffisant.

Le document JP2005097874 A décrit une structure multicouche contenant une couche décorative formée sur au moins un côté d'une couche centrale et un papier imprégné de résine amortissante placé à côté de la couche décorative, où le papier imprégné de résine amortissante est obtenu par imprégnation du papier avec une résine imprégnante qui comprend une matrice et un composé phénolique de faible poids moléculaire qui forme des interactions électrostatiques, des liaison hydrogène, produisant aussi une structure supramoléculaire.

Le document EP 0 167 455 A2 décrit une structure multicouche pour amortir les vibrations, où la structure comprend deux couches métalliques et une couche qui comprend une composition polymérique viscoélastique intercalée entre ces deux couches de métal et obtenue en mélangeant du polyvinylacétal et du carbone sous forme de particules.

Il existe donc le besoin de résoudre, au moins partiellement, les problèmes susmentionnés.

### RESUME DE L'INVENTION

La présente invention y parvient au moyen d'une structure multicouche et de son procédé de fabrication, comme il apparaîtra clairement à la lecture de la description qui va suivre.

L'invention a ainsi pour objet l'utilisation d'une structure multicouche ou d'un objet comportant au moins une structure multicouche, pour amortir des chocs, des vibrations et/ou des ondes sonores, ladite structure multicouche comportant au moins deux couches contigües, dites première et deuxième couches, la première couche comprenant au moins un matériau rigide et la deuxième couche comprenant au moins un matériau supramoléculaire ayant une bonne adhérence à la couche comprenant le matériau rigide.

Ladite structure multicouche est obtenue selon un procédé comprenant au moins les étapes suivantes :
(i) une étape de coulage d'une composition comprenant au moins un précurseur de matériau supramoléculaire, au contact d'une couche comprenant au moins un matériau rigide, pour former ensemble deux couches contigües,
   ledit précurseur étant obtenu par au moins les étapes successives suivantes :
   (a) la réaction d'au moins un composé au moins trifonctionnel (A) choisi parmi les trimères ou les mélanges de trimères et dimères d'acides gras d'origine végétale, avec au moins un composé (B) portant, d'une part, au moins un groupe réactif susceptible de réagir avec les fonctions réactives de (A) et, d'autre part, au moins un groupe associatif choisi parmi les groupes imidazolidonyle, triazolyle, triazinyle, bis-uréyle, uréido-pyrimidyle,
   (b) le mélange du ou des composé(s) obtenu(s) à l'étape (a) avec au moins un composé au moins difonctionnel (C), dont les fonctions réactives sont susceptibles de réagir avec les fonctions réactives du composé (A) au cours de l'étape de cuisson (ii), pour former des ponts ester ou thioester, seuls ou en combinaison avec des ponts amide ou urée.
   ledit matériau rigide étant choisi parmi le verre, le bois, les métaux ou leurs alliages, les céramiques, les polymères thermoplastiques polaires, chargés ou non, les résines thermodurcissables, les bétons, les mortiers, les plâtres, et
(ii) une étape de cuisson effectuée de sorte à convertir ledit précurseur en matériau supramoléculaire présentant une tangente Delta supérieure à 0,5, sur une plage de température large de 30°C au moins, telle que mesurée par analyse thermomécanique dynamique.

L'invention vise aussi l'utilisation de la structure multicouche ou d'un objet comprenant la structure multicouche, pour fabriquer des engins de locomotion, tels qu'automobiles, ferroviaires, nautiques, aéronautiques ou aérospatiales, ou encore pour le bâtiment.

Par couches « contigües », on entend des couches adjacentes s'étendant, au moins partiellement, voire totalement, au contact l'une de l'autre.

Par matériau « rigide », on entend un matériau dont le module en flexion à la température d'utilisation de la structure multicouche de l'invention est supérieur à 1800 MPa, préférentiellement supérieur à 2500 MPa, plus préférentiellement supérieur à 3000 MPa.

Par « matériau supramoléculaire » on entend un matériau comprenant des molécules arborescentes constituées chacune de fragments au moins difonctionnels et de fragments au moins trifonctionnels unis les uns aux autres par des ponts ester ou thioester, seuls ou en combinaison avec des ponts amide ou urée, lesdits ponts étant formés à partir de deux fonctions portées par des fragments différents, lesdites molécules comportant en outre, sur les fragments situés aux extrémités des arborescences, des groupes associatifs terminaux capables de s'associer les uns aux autres par des liaisons hydrogène et reliés de façon covalente aux fonctions ne participant pas auxdits ponts. Des modes de réalisation de ce matériau supramoléculaire ont été décrits par la Demanderesse par exemple dans les demandes WO 2009/071554 et WO 2010/112743.

Dans la demande WO 2010/112743, la préparation du matériau supramoléculaire comprend une étape de coulage dans un support non-adhérent de type PTFE, de façon à permettre le démoulage du matériau supramoléculaire cuit dans le moule de PTFE. Le matériau supramoléculaire final n'est pas une structure multicouche et ne comporte pas de couche de matériau rigide adhérent à une couche supramoléculaire.

Dans la demande WO 2012/152859 A1 est décrit un matériau thermodurci qui peut être utilisé pour fabriquer des structures multicouche à partir de feuilles de ce matériau thermodurci qui s'intercalent et font office de colle entre des matériaux de type bois, verre, plastique ou métal. Le matériau décrit est un matériau supramoléculaire comprenant des molécules arborescentes.

Par « arborescente», on entend selon l'invention une molécule ramifiée dont le squelette comporte au moins deux ramifications. Cette définition n'exclut pas que diverses ramifications d'une même molécule puissent se rejoindre pour former des boucles.

Par « groupes associatifs», on entend des groupes susceptibles de s'associer les uns aux autres par des liaisons hydrogène, avantageusement par 1 à 6 liaisons hydrogène. Les groupes associatifs selon l'invention sont les groupes imidazolidonyle, triazolyle, triazinyle, bis-uréyle, uréido-pyrimidyle, étant de préférence les groupes imidazolidonyle. On préfère que le nombre moyen des groupes associatifs terminaux par molécule du matériau soit d'au moins 3. Il est avantageusement d'au plus 6. Ceux-ci sont reliés de façon covalente à la molécule. Par « de façon covalente», on entend que les groupes associatifs sont reliés aux fonctions terminales de la molécule soit via une liaison directe soit, de préférence, via une chaîne, notamment alkylène.

Par « fonctions » ou « groupes réactifs », on entend des fonctions chimiques susceptibles de réagir avec d'autres fonctions chimiques pour former des liaisons covalentes, conduisant notamment à la formation de ponts ester, thioester, amide, urée ou uréthanne et en particulier de ponts ester et amide. Un composé « difonctionnel » désigne un composé portant deux fonctions réactives identiques ou différentes. Un composé « au moins trifonctionnel » désigne un composé portant au moins trois fonctions réactives identiques ou différentes.

Par « fragment », on entend au sens de l'invention un motif d'une molécule situé entre deux ou trois ponts tels que définis ci-dessus. Un fragment « difonctionnel » est susceptible d'être obtenu à partir d'un composé difonctionnel et un fragment « trifonctionnel » est susceptible d'être obtenu à partir d'un composé trifonctionnel. Les molécules arborescentes selon l'invention comprennent des fragments au moins difonctionnels, avantageusement difonctionnels, et des fragments au moins trifonctionnels, avantageusement trifonctionnels.

Un avantage du matériau supramoléculaire mis en oeuvre dans l'invention et de son précurseur est que les liaisons hydrogène sont des liaisons physiques réversibles, notamment sous l'influence de la température ou par l'action d'un solvant sélectif.

Contrairement aux compositions classiques pour préparer des élastomères, le précurseur du matériau supramoléculaire de l'invention a l'avantage de pouvoir se fluidifier au-dessus d'une certaine température, ce qui facilite sa mise en oeuvre, en particulier son bon étalement pour former une couche homogène et continue au sein de la structure de l'invention, ainsi que le recyclage de la structure. De plus, il démontre un excellent mouillage et une bonne adhérence à la couche comprenant le matériau rigide, conduisant à la structure multicouche selon l'invention.

Grâce au procédé de fabrication par coulage de l'invention, il est ainsi possible de fabriquer une structure multicouche associant au moins un matériau amortissant à au moins un matériau rigide de façon simple ; notamment, il est désormais possible de s'affranchir des étapes préalables de formation et d'assemblage d'une pièce en matériau élastomère ainsi que des traitements de surface classiques.

Le matériau supramoléculaire mis en oeuvre dans l'invention est, comme les élastomères classiques, capable de présenter une stabilité dimensionnelle sur des temps très longs et de recouvrer sa forme initiale après de grandes déformations.

Les structures multicouches utilisées selon l'invention démontrent, après cuisson, une excellente capacité d'amortissement des chocs, des vibrations et/ou des ondes sonores dans une large gamme de températures, une excellente cohésion des couches qui les constituent, une bonne résistance aux contraintes mécaniques, notamment à la compression, à la flexion, au cisaillement, à la traction.

Au sein de la structure multicouche utilisée selon l'invention, la couche comprenant le polymère supramoléculaire démontre en outre une capacité d'auto-cicatrisation en cas de déchirure occasionnée par de fortes sollicitations mécaniques de la structure, notamment en traction, en flexion ou en cisaillement. Par comparaison au matériau supramoléculaire utilisé seul (connu des demandes WO 2009/071554 et WO 2010/112743), qui nécessite de remettre en contact les surfaces fracturées pour que la cicatrisation opère, au sein de la structure multicouche de l'invention la couche comprenant le matériau supramoléculaire est capable une fois déchirée de s'auto-réparer, sans nécessité d'une intervention extérieure pour remettre en contact les parties fracturées, ni de chauffer ni d'appliquer une pression importante ni d'effectuer une quelconque réaction chimique. La couche ainsi réparée conserve avantageusement sa fonction amortissante au sein de la structure. L'utilisation selon l'invention concerne une structure dans laquelle une ou plusieurs couches comprenant un matériau rigide s'étendent de façon contigüe à une couche comprenant un matériau supramoléculaire de sorte à exercer sur elle une contrainte suffisante pour maintenir en contact ses parties fracturées et ainsi permettre sa cicatrisation.

### BREVE DESCRIPTION DES FIGURES

La figure 1 illustre la viscosité de précurseurs de matériaux supramoléculaires mis en oeuvre dans l'invention (en Pa.s) en fonction de la température (en °C), telle que mesurée par rhéométrie plan-plan à un cisaillement de 50s⁻¹.
Les figures 2 et 3 sont des photographies de structures tricouches conformes à l'invention, le matériau supramoléculaire étant pris en sandwich entre deux couches rigides.
La figure 4 illustre la rupture cohésive de la couche comprenant le matériau supramoléculaire au sein d'une structure conforme à l'invention.

### DESCRIPTION DETAILLEE

Sauf mention contraire, les pourcentages de matière mentionnés sont des pourcentages en poids.

Lorsqu'il est fait référence à des intervalles, les expressions du type « allant de...à» incluent les bornes de l'intervalle. A l'inverse, les expressions du type « compris entre...et... » excluent les bornes de l'intervalle.

La structure selon l'invention comporte au moins une couche comprenant, voire étant constituée de, au moins un matériau rigide.

Comme matériaux rigides on utilise le verre, le bois, les métaux ou leurs alliages, les céramiques, les polymères thermoplastiques polaires, chargés ou non, les résines thermodurcissables, les bétons, les mortiers, les plâtres. Ces matériaux peuvent être utilisés seuls, ou en mélanges, ou assemblés en composites, éventuellement renforcés par des charges ou des fibres courtes ou longues, tissées ou non, naturelles ou synthétiques.

Le bois peut être massif, laminé, contreplaqué ou aggloméré.

Comme métaux et alliages, on peut citer les aciers, le laiton, le bronze, le cuivre, la fonte, l'aluminium, le titane, l'étain et leurs combinaisons.

Comme céramiques, on peut notamment utiliser l'alumine (Al₂O₃), le nitrure de silicium (Si₃N₄), le Sialon, le carbure de bore (B₄C), le carbure de silicium (SiC), la cordiérite (silicate alumineux ferro-magnésien), la mullite (Al₆Si₂O₁₃), le nitrure d'aluminium (AlN), la zircone (ZrO₂) éventuellement stabilisée à l'yttrium (ZrO₂/Y₂O₃ dite Y-TZP) ou à la magnésie (ZrO₂/MgO dite PSZ), le nitrure de bore (NB), le borure d'aluminium (AlB₂), l'oxyde de magnésium (MgO), l'oxyde de zinc (ZnO), l'oxyde magnétique de fer (Fe₃O₄), les pérovskites, telles que BaTiO₃, CaTiO₃, SrTiO₃, (PbSr)TiO₃ ou Pb(Zr_{0.5}Ti_{0.5})O₃, la stéatite (SiO₄Mg₂), les silicates d'aluminium (argiles), les céramiques de type terre cuite, faïence, grès, porcelaine, émaux, ciments, liants hydrauliques, et leurs combinaisons.

Comme polymères thermoplastiques polaires on peut citer les polycarbonates, les polyamides, l'acrylonitrile butadiène styrène (ABS), l'acrylonitrile styrène acrylate (ASA), les polyesters comme le poly(éthylène téréphtalate) (PET) ou le polybutylène téréphtalate (PBT), le polyméthacrylate de méthyle (PMMA), le polyétheréthercétone (PEEK), le polyéthercétonecétone (PEKK), le poly(naphtalate d'éthylène) (PEN), les polyethersulfones, les polyimides, les polyacétals, les polystyrènes, les polyaramides et leurs combinaisons.

Par « résine thermodurcissable », on entend un polymère pouvant être réticulé chimiquement par un durcisseur, en une résine thermodure, qui, une fois obtenue, ne peut plus être transformée par l'action de la chaleur. Comme résines thermodurcissables pouvant être mises en oeuvre selon l'invention, on peut notamment citer les résines époxy, polyester, vinylester, formophénolique, polyuréthane, urée-formol et leurs mélanges.

Comme fibres on peut notamment utiliser des fibres de verre, carbone, polyester, polyamide, aramide, des fibres cellulosiques, nanocellulosiques ou encore des fibres végétales (lin, chanvre, sisal, bambou...) et leurs mélanges.

Selon un mode de réalisation, ledit matériau rigide est un matériau composite, élaboré à partir d'au moins une résine thermodurcissable et de fibres, la résine et les fibres pouvant avantageusement être choisies parmi celles citées ci-dessus.

Selon un mode de réalisation, le matériau rigide est choisi de façon telle que la couche le comprenant démontre un module de flexion supérieur à 1800 MPa, préférentiellement supérieur à 2500 MPa, plus préférentiellement supérieur à 3000 MPa. La structure de l'invention démontre dans ces conditions une excellente capacité d'amortissement. Il est notamment possible d'utiliser des matériaux très rigides tels que les céramiques, les verres et les alliages métalliques « durs » comme les aciers, les fontes, les alliages d'aluminium et leurs combinaisons.

L'épaisseur de la couche comportant le matériau rigide n'est pas limitée à une quelconque valeur. Elle peut être constante ou variable, selon les applications visées.

La structure multicouche utilisée selon l'invention comporte au moins une couche comprenant, voire étant constituée de, au moins un matériau supramoléculaire, tel que défini ci-dessus. Cette couche est obtenue par coulage d'une composition comprenant au moins un précurseur dudit matériau supramoléculaire, au contact d'une couche comprenant un matériau rigide, puis cuisson, de sorte à convertir ce précurseur en matériau supramoléculaire, conformément au procédé de fabrication de la structure selon l'invention.

Ledit précurseur est préparé suivant un procédé comprenant au moins les étapes successives suivantes :
(a) la réaction d'au moins un composé au moins trifonctionnel (A) avec au moins un composé (B) portant, d'une part, au moins un groupe réactif susceptible de réagir avec les fonctions réactives de (A) et, d'autre part, au moins un groupe associatif,
(b) le mélange du ou des composé(s) obtenu(s) à l'étape (a) avec au moins un composé au moins difonctionnel (C), dont les fonctions réactives sont susceptibles de réagir avec les fonctions réactives du composé (A) au cours de l'étape ultérieure de cuisson (ii) du procédé de fabrication de la structure de l'invention, pour former des ponts ester ou thioester, seuls ou en combinaison avec des ponts amide ou urée.

Le composé (A) mis en oeuvre porte au moins trois fonctions identiques ou différentes choisies parmi les fonctions acide. Il comprend avantageusement de 5 à 100, de préférence de 12 à 100 et plus préférentiellement de 24 à 90 atomes de carbone.

Le composé (A) peut être mis en oeuvre sous forme de mélange avec des composés mono- et difonctionnels, tels que des mono- et diacides, en particulier des mono- et dimères d'acides gras.

Le composé (A) est notamment choisi parmi les trimères (oligomères de 3 monomères identiques ou différents) et mélanges de dimères et trimères d'acides gras d'origine végétale.

Ces composés résultent de l'oligomérisation d'acides gras insaturés tels que : l'acide undécylénique, myristoléique, palmitoléique, oléique, linoléique, linolénique, ricinoléique, eicosénoïque, docosénoïque, que l'on trouve habituellement dans les huiles de pin (*Tall oil fatty acids*)*,* colza, maïs, tournesol, soja, pépins de raisin, lin, jojoba, ainsi que les acides eicosapentaénoïque et docosahexaénoïque que l'on trouve dans les huiles de poissons.

Le composé (B) porte au moins un groupe réactif qui peut notamment être choisi parmi les groupes amine primaire ou secondaire ou alcool, étant avantageusement choisi parmi les groupes amine primaire ou secondaire. En variante, le composé (B) peut porter au moins deux tels groupes, identiques ou différents.

Le composé (B) peut notamment répondre à l'une quelconque des formules (B1) à (B3) : 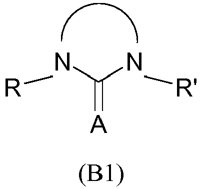 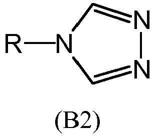 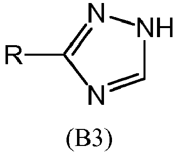 où :
R désigne un motif contenant au moins un groupe amine primaire ou secondaire ou alcool,
R' désigne un atome d'hydrogène,
A désigne un atome d'oxygène ou de soufre ou un groupement -NH, de préférence un atome d'oxygène.

Des exemples préférés de composés (B) sont la 2-aminoéthylimidazolidone (UDETA), la 1-(2-[(2-aminoéthyl)amino]éthyl)imidazolidone (UTETA), la 1-(2-{2-[(2-aminoéthylamino]éthyl}amino)éthyl]imidazolidone (UTEPA), le 3-amino-1,2,4-triazole et le 4-amino-1,2,4-triazole. De façon plus préférée, le composé (B) est la 2-aminoéthylimidazolidone (UDETA).

Le composé (C) porte au moins deux fonctions, identiques ou différentes, pouvant notamment être choisies parmi les fonctions époxy, alcool et amine ; étant avantageusement des fonctions époxy.

Le composé (C) est de préférence un diépoxyde ou un polyépoxyde renfermant au moins trois fonctions époxyde. En variante encore, le composé (C) peut être un diol ou un polyol renfermant au moins trois fonctions alcool.

Le composé (C) est de préférence un diépoxyde. Il peut ainsi être choisi parmi : les bisphenol A diglycidyl éther, bisphenol F diglycidyl éther, le tétrabromo bisphénol A diglycidyl éther, ou les hydroquinone diglycidyl éther, éthylène glycol diglycidyl éther, propylène glycol diglycidyl éther, butylène glycol diglycidyl éther, néopentyl glycol diglycidyl éther, 1,4-butanediol diglycidyl éther, 1,6-hexanediol diglycidyl éther, cyclohexanediméthanol diglycidyl éther, polyéthylène glycol diglycidyl éther, polypropylène glycol diglycidyl éther, polytétraméthylène glycol diglycidyl éther, résorcinol diglycidyl éther, néopentylglycol diglycidyl éther, bisphenol A polyéthylène glycol diglycidyl éther, bisphénol A polypropylèneglycol diglycidyl éther, diglycidyl ester d'acide téréphtalique, les acides gras polyinsaturés époxydés, et limonène époxydé; et leurs mélanges.

En variante, le composé (C) peut être un polyépoxyde renfermant au moins trois fonctions époxyde, choisi par exemple parmi : le triglycidyl éther d'huile de ricin, le 1,1,1-tris(hydroxyméthyl)propane triglycidyl éther, le trisphénol triglycidyl éther, le glycérol tridlycidyl éther, le glycérol propoxylate triglycidyl éther, le glycérol éthoxylate triglycidyl éther, le triméthylol propane triglycidyl éther, le sorbitol polyglycidyl éther, le polyglycérol polyglycidyl éther, le pentaérythritolpolyglycidyl éther, le poly(glycidyl acrylate), le polyglycidyl méthacrylate, les acides gras polyinsaturés époxydés, les huiles végétales époxydées, les huiles de poisson époxydées et le limonène époxydé.

En variante, le composé (C) peut être un diol. Dans ce cas, le composé (C) peut être choisi parmi : l'éthylène glycol, le propylène glycol, le tétraméthylène glycol, l'hexaméthylène glycol, l'octanediol, le nonanediol, le décanediol, le diéthylène glycol, le dipropylène glycol, le triéthylène glycol, le tétraéthylène glycol, le polyéthylène glycol, le polypropylène glycol, le polytétraméthylène glycol, les polyesters à extrémités hydroxy, polybutadiènes à extrémités hydroxy, polydiméthylsiloxanes à extrémités hydroxy, polyisobutylènes à extrémités hydroxy, les copolymères polybutadiène-co-acrylonitrile à extrémités hydroxy, les dimères diols issus d'acides gras et leurs mélanges.

En variante, le composé (C) peut être un polyol renfermant au moins trois fonctions alcool. Des exemples de tels composés sont notamment : les sucres tels que le sorbitol, le pentaérythritol, le triméthylolpropane, ainsi que le glycérol et ses dérivés éthoxylés et propoxylés, l'huile de ricin (castor oil) et les dimères diols issus d'acides gras tels le Pripol® 2033 de Croda.

Selon un mode de réalisation particulier du précurseur mis en oeuvre dans l'invention :
- le composé (A) est un trimère de l'un au moins des acides suivants : l'acide undécylénique, l'acide myristoléique, l'acide palmitoléique, l'acide oléique, l'acide linoléique, l'acide linolénique, l'acide ricinoléique, l'acide eicosénoïque, l'acide docosénoïque, l'acide eicosapentaénoïque et l'acide docosahexaénoïque,
- le composé (B) est choisi parmi : la 2-aminoéthylimidazolidone (UDETA), 1-(2-[(2-aminoéthyl)amino]éthyl)imidazolidone (UTETA), la 1-(2-{2-[(2-aminoéthylamino]éthyl}amino)éthyl]imidazolidone (UTEPA), le 3-amino-1,2,4-triazole et le 4-amino-1,2,4-triazole, et
- le composé (C) est choisi parmi : les bisphenol A diglycidyl éther, bisphenol F diglycidyl éther, le tétrabromo bisphénol A diglycidyl éther, ou les hydroquinone diglycidyl éther, éthylène glycol diglycidyl éther, propylène glycol diglycidyl éther, butylène glycol diglycidyl éther, néopentyl glycol diglycidyl éther, 1,4-butanediol diglycidyl éther, 1,6-hexanediol diglycidyl éther, cyclohexanediméthanol diglycidyl éther, polyéthylène glycol diglycidyl éther, polypropylène glycol diglycidyl éther, polytétraméthylène glycol diglycidyl éther, résorcinol diglycidyl éther, néopentylglycol diglycidyl éther, bisphenol A polyéthylène glycol diglycidyl éther, bisphénol A polypropylèneglycol diglycidyl éther, diglycidyl ester d'acide téréphtalique, le triglycidyl éther d'huile de ricin, le 1,1,1-tris(hydroxyméthyl)propane triglycidyl éther, le trisphénol triglycidyl éther, le glycérol tridlycidyl éther, le glycérol propoxylate triglycidyl éther, le glycérol éthoxylate triglycidyl éther, le triméthylol propane triglycidyl éther, le sorbitol polyglycidyl éther, le polyglycérol polyglycidyl éther, le pentaérythritolpolyglycidyl éther, le poly(glycidyl acrylate), le polyglycidyl méthacrylate, les acides gras polyinsaturés époxydés, les huiles végétales époxydées, les huiles de poisson époxydées, le limonène époxydé et leurs mélanges.

La capacité d'absorption des chocs de la structure multicouche peut être ajustée par le choix du composé (C) pour une proportion donnée des composés (A), (B) et (C), ou par le choix du composé (A) pour une proportion donnée des composés (A), (B) et (C), ou encore par le choix du ratio des composés (B) et (C).

La capacité d'absorption des chocs de la structure multicouche peut notablement être renforcée lorsque le composé (C) est choisi parmi : l'huile de soja époxydée, le bisphenol A diglycidyl éther, le bisphenol F diglycidyl éther.

Selon un mode de réalisation, le composé (B) est introduit à l'étape (a) en sous-stoechiométrie par rapport au composé (A), de sorte à ce que certaines fonctions réactives du composé (A) restent disponibles à l'issue de la réaction entre les composés (A) et (B). Ainsi, le ratio molaire du nombre de groupes réactifs du composé (B) susceptibles de réagir avec les fonctions réactives du composé (A), sur le nombre de fonctions réactives du composé (A), est avantageusement compris entre 0,1 et 0,8, et plus préférentiellement entre 0,2 et 0,6.

Selon un mode de réalisation, le ratio molaire du nombre de fonctions réactives du composé (C) susceptibles de réagir avec les fonctions réactives du composé (A), sur le nombre de fonctions réactives du composé (A), est compris entre 0,1 et 0,9, et plus préférentiellement entre 0,4 et 0,8.

L'ajustement des ratios ci-dessus permet un bon compromis en termes de capacité d'auto-cicatrisation du matériau supramoléculaire et de cohésion de la structure multicouche.

Selon un mode de réalisation, le ratio molaire du nombre de groupes réactifs du composé (B) et de fonctions réactives du composé (C) susceptibles de réagir avec les fonctions réactives du composé (A), sur le nombre de fonctions réactives du composé (A), est compris entre 0,8 et 1,2, et plus préférentiellement entre 0,9 et 1,1.

Selon un mode de préparation du précurseur, l'étape (b) de mélange du composé (C) avec le ou les composés issus de l'étape (a) est mise en oeuvre à une température allant de 50°C à 150°C, de préférence de 70°C à 130°C.

La composition comprenant le précurseur peut éventuellement comprendre en outre au moins un composé choisi parmi des charges, des pigments, des colorants, des polymères, des plastifiants, des fibres longues ou courtes, tissées ou non, synthétiques ou naturelles, choisies par exemple parmi celles précitées, des agents retardateurs de flamme, des agents antioxydants, des lubrifiants, ou autres additifs classiques de la formulation des polymères ou destinés à ajuster les propriétés de la couche incorporant le précurseur au sein de la structure multicouche. La composition comprenant le précurseur peut également comprendre au moins un catalyseur destiné à en accélérer la réticulation ultérieure, lors de l'étape de cuisson (ii).

La composition comprenant le précurseur est ensuite coulée au contact de la couche comprenant le matériau rigide. Le coulage est avantageusement mis en oeuvre de façon telle que la viscosité de la composition soit inférieure à 50 Pa.s, de préférence inférieure à 30 Pa.s, de préférence inférieure à 10 Pa.s et de façon tout à fait préférée à une viscosité allant de 0,1 à 5 Pa.s, telle que mesurée par rhéométrie plan-plan à un cisaillement de 50s⁻¹. La température de la composition peut notamment être ajustée pour atteindre la fluidité requise, par tout moyen approprié.

Selon un mode de réalisation, la composition comprenant le précurseur est coulée dans un espace au moins partiellement délimité par la couche comprenant le matériau rigide et un joint placé au contact de la couche comprenant le matériau rigide. De préférence, cet espace est délimité par au moins une autre couche, placée en regard de la couche comprenant le matériau rigide et au contact du joint. Dans une première variante, cette autre couche est partie intégrante de la structure multicouche. Alternativement, elle est destinée à être retirée à l'issue de l'étape de cuisson (ii) de la structure. Une telle couche peut être par exemple un film antiadhésif, notamment un film en silicone.

Le joint assure l'étanchéité du dispositif pendant l'étape de cuisson (ii) de la structure. Il est de préférence en un matériau souple, lequel peut être de toute nature connue de l'homme du métier à condition d'être stable à la température de cuisson. Ce matériau est de préférence sélectionné pour son aptitude à se détacher facilement des couches au contact desquelles il se trouve, après l'étape de cuisson (autrement dit au moins la couche comprenant le matériau supramoléculaire et la couche comprenant le matériau rigide). On peut utiliser par exemple un joint en PVC, téflon, PVDF, silicone, etc.

Selon un mode de réalisation, la ou les couches comprenant le matériau rigide et le joint sont maintenus en contact pendant l'étape de coulage (ii) à l'aide de tous moyens de serrage, par exemple des serre-joints et/ou une ou plusieurs plaques rigides disposées de part et d'autre des faces externes de plus grandes dimensions de la structure multicouche.

Selon un mode de réalisation, le précurseur est coulé par au moins un, et de préférence un, orifice, traversant latéralement le joint. La composition comprenant le précurseur peut notamment être injectée à l'aide d'un pistolet pourvu à l'une de ses extrémités d'une buse d'injection et relié par une autre de ses extrémités à un fondoir. Une buse telle que celles utilisées pour des applications de « hot melts », ou un capillaire apte à être plongé dans l'orifice, ou une seringue automatisée ou manuelle, peuvent être utilisés.

Selon un mode de réalisation, la composition comprenant le précurseur est étalée au contact de la couche rigide à l'aide de tout moyen approprié, par exemple une brosse, un rouleau, un pinceau, un dispositif d'enduction. On peut ainsi réaliser des structures comportant des couches de matériaux supramoléculaires particulièrement fines.

La structure multicouche est ensuite soumise, localement ou totalement, à une étape de cuisson, de manière à transformer ledit précurseur en matériau supramoléculaire présentant une tangente Delta supérieure à 0,5, sur une plage de température large de 30°C au moins, telle que mesurée par analyse thermomécanique dynamique. Est ainsi obtenue une structure démontrant notamment les propriétés d'amortissement, de cicatrisation et/ou de cohésion recherchées. Cette étape est de préférence mise en oeuvre à une température allant de 80°C à 180°C, avantageusement de 100°C à 150°C, plus avantageusement de 110°C à 130°C. Selon un mode de réalisation, l'ensemble formé par la structure multicouche, le joint et les éventuels moyens de serrage sont exposés à cette température. Alternativement, il est possible de soumettre localement le précurseur à l'étape de cuisson, sans exposer le reste de la structure. On peut par exemple utiliser un moyen de chauffage soufflant, un pistolet thermique ou un moyen de chauffage infrarouge.

Ainsi, on obtient une structure multicouche comportant une couche comprenant un matériau supramoléculaire comprenant des ponts de liaison, de préférence amide, avantageusement formés dans l'étape (a) de préparation du précurseur par réaction des groupes réactifs (avantageusement amine primaire ou secondaire) du composé (B) avec des fonctions réactives (avantageusement, des fonctions acide) du composé (A), et des ponts de liaison (avantageusement ester) avantageusement formés dans l'étape de cuisson (ii) par réaction des fonctions réactives (de préférence acides) restantes du composé (A) avec des fonctions réactives (avantageusement époxy) du composé (C). Ce matériau renferme également des liaisons hydrogène entre les groupements associatifs portés par les molécules qui le constituent.

La structure multicouche utilisée selon l'invention présente une grande capacité d'absorption des chocs, sur une large gamme de température. Cette capacité d'absorption des chocs dépend notamment du facteur de perte (ou tangente Delta) de la couche comprenant le matériau supramoléculaire. La couche comprenant le matériau supramoléculaire présente une tangente Delta supérieure à 0,5, sur une plage de température large de 30°C au moins, telle que mesurée par analyse thermomécanique dynamique (DMTA, Dynamic Mechanical ThermoAnalysis), pour différentes sollicitations (torsion rectangulaire, traction, compression). La tangente Delta de la couche comprenant le matériau supramoléculaire peut notamment et avantageusement être ajustée par le choix et les proportions des composés (A), (B) et (C), ou encore par l'ajout d'additifs à la composition destinée à former la couche comprenant le matériau supramoléculaire, tels que des charges ou des plastifiants.

La couche comprenant le matériau supramoléculaire peut le cas échéant comprendre d'autres matériaux, notamment issus d'additifs de formulation présents dans la composition dont cette couche est issue, comme expliqué précédemment. En variante, le matériau supramoléculaire peut être présent dans la couche à l'état dispersé ou en phase bi-continue avec au moins un autre matériau, par exemple polymère.

Selon un mode de réalisation, la structure multicouche utilisée selon l'invention comporte au moins deux couches comprenant un matériau supramoléculaire, adjacentes ou non. Ceci peut permettre de conférer à la structure multicouche la propriété d'amortissement dans une gamme plus large de températures ou de fréquences de sollicitations, comparativement à une structure comportant uniquement l'une ou l'autre de ces couches. Par exemple, le matériau supramoléculaire d'au moins l'une des couches comportant un matériau supramoléculaire est choisi de sorte à ce que la couche l'incorporant présente une tangente Delta supérieure à 0,5 dans une plage de température ou de fréquences de sollicitations différente de la tangente Delta de, au moins, l'une des autres couches comprenant un matériau supramoléculaire.

On comprend par ailleurs que le matériau supramoléculaire présent dans la structure multicouche de l'invention peut renfermer des molécules autres que les molécules arborescentes décrites précédemment, en particulier dans le cas où le composé (A) renferme des trimères d'acides gras mélangés à des mono- et/ou dimères d'acides gras. Avantageusement, le matériau mis en oeuvre dans l'invention renferme au moins 25% et, mieux, au moins 50% en nombre desdites molécules arborescentes.

On préfère selon l'invention que ce matériau renferme également des liaisons hydrophobes intermoléculaires, avantageusement dues à des interactions entre des groupes alkyle portés par chacune des molécules arborescentes décrites précédemment. Par « alkyle », on entend au sens de l'invention des groupes latéraux (CₙH₂ₙ₊₁) et non pas des chaînes alkylène (CₙH₂ₙ), par exemple. De façon particulièrement préférée, chacune de ces molécules comporte des chaînes alkyle en C₆-C₂₄, avantageusement en plus grand nombre que lesdits groupes associatifs terminaux. Ils peuvent notamment être apportés par les composés (A), en particulier lorsqu'il s'agit de trimères d'acides gras.

Le matériau supramoléculaire mis en oeuvre dans l'invention présente avantageusement des propriétés élastomères, c'est-à-dire la propriété de pouvoir être soumis à une déformation uniaxiale à température ambiante et de recouvrer, une fois cette contrainte relâchée, sa dimension initiale, avec une déformation rémanente inférieure à 10% et de préférence inférieure à 5% de sa dimension initiale, selon la déformation appliquée initialement.

Selon un mode de réalisation, le module de cisaillement G' de la couche comprenant le matériau supramoléculaire va de 1 à 500 MPa, et préférentiellement de 3 à 100 MPa. Une souplesse satisfaisante de la structure multicouche est ainsi obtenue.

Selon un mode de réalisation, la couche comportant le matériau supramoléculaire présente au moins une portion dont l'épaisseur va de 5 µm à 20 mm, de préférence de 5 µm à 10 mm. Par « portion », on considère toute section de la structure délimitée par deux plans perpendiculaires à ses faces de plus grandes dimensions. La couche comportant le matériau rigide peut bien sûr présenter une épaisseur constante comprise dans les gammes précitée. La couche comportant le matériau supramoléculaire peut notamment présenter une portion plus épaisse là où l'amortissement maximal est recherché. Cette variante de réalisation est d'autant plus facile à mettre en oeuvre avec le procédé de fabrication de l'invention, qui permet de couler le matériau supramoléculaire dans des interstices de géométrie complexe. Un bon compromis en termes de qualité de la couche (continuité, régularité de son épaisseur) et de rigidité d'ensemble de la structure est obtenu avec ces gammes d'épaisseurs.

Lorsqu'elle est appliquée en faible épaisseur, avantageusement de 5 à 200 microns, notamment de 15 à 50 microns, la couche comprenant le matériau supramoléculaire peut, en plus ou alternativement à sa fonction amortissante, être utilisée comme adhésif.

Selon un mode de réalisation, la structure multicouche utilisée selon l'invention comporte au moins une troisième couche contigüe à la couche comprenant le matériau supramoléculaire, de façon à ce que la couche comprenant le matériau supramoléculaire soit prise en sandwich, au moins partiellement sinon totalement, entre la couche comportant le matériau rigide (dite première couche) et cette troisième couche.

La troisième couche peut comporter voire être constituée de tout matériau, en fonction des applications visées. Il peut avantageusement s'agir d'un matériau rigide, identique ou différent de celui présent dans la première couche, avantageusement choisi parmi ceux listés plus haut. En variante, il peut s'agir d'un matériau souple, avantageusement choisi parmi des élastomères conférant à la structure des propriétés mécaniques additionnelles par rapport à celles apportées par la couche supramoléculaire, telle qu'une meilleure tenue à l'abrasion ou une plus grande résistance chimique. On peut citer à ce titre les élastomères à base de polyuréthane, les NBR (nitrile-butadiene rubber), le caoutchouc naturel, les SBR (styrene-butadiene rubber), les élastomères thermoplastiques, les élastomères styrèniques et leurs combinaisons.

Selon un mode de réalisation particulier, la couche comportant le matériau supramoléculaire s'étend entre une couche de matériau conducteur, par exemple un métal, et une couche de matériau isolant, par exemple un verre, une céramique, du béton, ou un matériau composite associant différents matériaux isolants.

La structure multicouche peut bien entendu comporter, outre les couches décrites ci-dessus, une ou plusieurs couches supplémentaires, de toute nature connue de l'homme du métier, dans la mesure où leur présence n'altère pas les propriétés avantageuses de la structure obtenues conformément à l'invention.

La couche comportant le matériau rigide peut notamment porter, sur toute portion de face ne se trouvant pas au contact de la couche comportant le matériau supramoléculaire, un éventuel revêtement ou avoir subi un éventuel traitement de surface.

Il en va de même de la couche comportant le polymère supramoléculaire, pour ce qui est de toute portion de ses faces qui n'est pas au contact de la ou des couches comportant le matériau rigide, telle que définies ci-avant.

La structure multicouche utilisée selon l'invention peut elle-même être incorporée à un objet ou une structure de taille plus importante. A cet égard, au moins deux structures multicouches peuvent être superposées ou juxtaposées. On peut avantageusement utiliser le matériau supramoléculaire défini ci-avant comme joint entre ces structures.

### EXEMPLES

Les exemples suivants illustrent l'invention sans la limiter.

### Exemple 1 : Procédé de synthèse d'un précurseur de matériau supramoléculaire selon l'invention

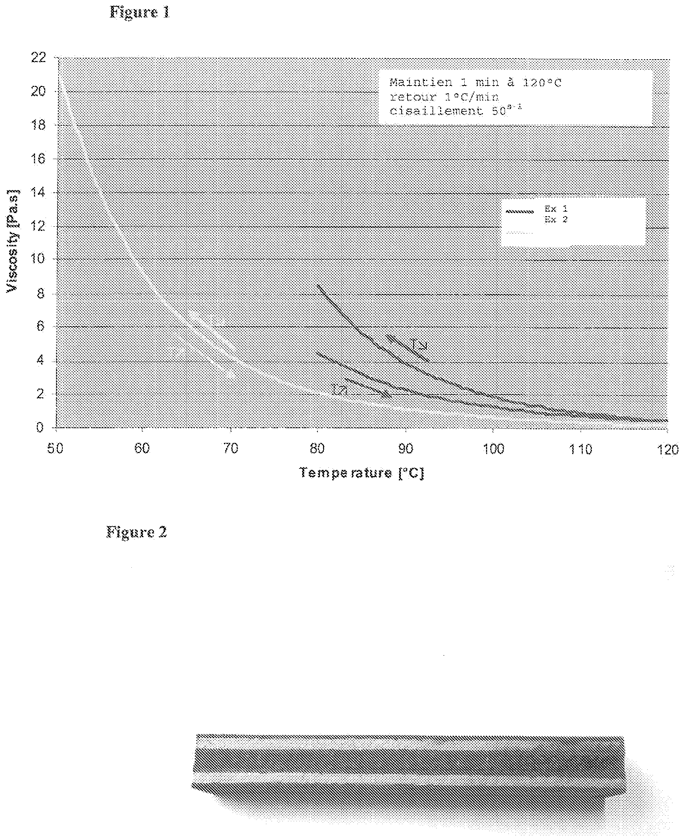

Dans un réacteur Schott de volume utile 4000 mL, posé sur un chauffe ballon électrique et équipé d'une sonde de température, d'une agitation mécanique avec un mobile de type ancre en polytetrafluoroéthylène, d'une ampoule de coulée, d'un réfrigérant condenseur, d'un Dean-Stark et d'une entrée d'azote terminée par une canne plongeante en polytétrafluoroéthylène, on introduit 1000 g de Pripol® 1040 de Croda (indice d'acide 186), soit 3,32 mole d'acide carboxylique et 245 g de 2-aminoéthylimidazolidone (UDETA) à 87,6% de pureté en poids soit 1,66 mole d'amine. On suppose que les impuretés de l'UDETA peuvent apporter l'équivalent de 0,13 mol supplémentaires. Le mélange est chauffé à 170°C pour éliminer l'eau de condensation. Lorsque l'eau de condensation est éliminée et piégée dans le Dean-Stark, le milieu est refroidi à 80°C. A 80°C, on ajoute 294 g d'une résine époxy de type DGEBA, l'Epikote® 828 EL de Resolution® (taux d'époxy de 5,2 mol/kg), soit 1,53 mol et on laisse sous agitation à 80°C pendant 15 minutes. Le produit ainsi obtenu est vidé du réacteur. Sa viscosité est mesurée par rhéométrie plan-plan à un cisaillement de 50s⁻¹. La figure 1 montre que dans une plage de température s'étendant au moins de 80°C à 120°C le produit obtenu est liquide. Il est ensuite stocké sans cuisson dans des pots de polypropylène.

### Exemple 2 : Procédé de synthèse d'un précurseur de matériau supramoléculaire selon l'invention

Dans un réacteur Schott de volume utile 4000 mL, posé sur un chauffe ballon électrique et équipé d'une sonde de température, d'une agitation mécanique avec un mobile de type ancre en polytetrafluoroéthylène, d'une ampoule de coulée, d'un réfrigérant condenseur, d'un Dean-Stark et d'une entrée d'azote terminée par une canne plongeante en polytétrafluoroéthylène, on introduit 1000 g de Pripol® 1040 de Croda (indice d'acide 186), soit 3,32 mole d'acide carboxylique et 245 g de 2-aminoéthylimidazolidone (UDETA) à 87,6% de pureté en poids soit 1,66 mole d'amine. On suppose que les impuretés de l'UDETA peuvent apporter l'équivalent de 0,13 mol supplémentaire. Le mélange est chauffé à 170°C pour éliminer l'eau de condensation. Lorsque l'eau de condensation est éliminée et piégée dans le Dean-stark, le milieu est refroidi à 120°C. A 120°C, on ajoute 414 g d'huile de soja époxydée Ecepox® PB 3 d'Arkema (taux d'époxy de 3,7 mol/kg), soit 1,53 mol et on laisse sous agitation à 120°C pendant 15 minutes. Le produit ainsi obtenu est vidé du réacteur. Sa viscosité est mesurée par rhéométrie plan-plan à un cisaillement de 50s⁻¹. La figure 1 montre que dans une plage de température allant au moins de 50°C à 120°C le produit obtenu est liquide. Il est ensuite stocké sans cuisson dans des pots de polypropylène.

### Exemple 3 : Réalisation d'une structure bicouche aluminium/matériau supramoléculaire obtenu à partir du précurseur de l'exemple 1

On réalise le montage suivant : on dispose une plaque en acier rigide de 20 cm par 20 cm et d'épaisseur 2 mm sur laquelle on applique un film silicone anti-adhérent de mêmes dimensions. Un contre-moule est réalisé avec une plaque en acier comparable à la précédente sur laquelle on applique un feuillard d'aluminium de mêmes dimensions et d'épaisseur 0.5 mm. On dispose ensuite en forme de U, avec un espacement entre les branches de 18 cm, entre le feuillard d'aluminium et le film de silicone, un joint en PVC de 2.5 mm de diamètre, pour garantir l'étanchéité du montage. Le montage ainsi réalisé (plaque acier / film silicone / joint PVC / feuillard aluminium / plaque acier) est maintenu en position serrée par des serre-joints. Le précurseur obtenu à l'exemple 1 est placé dans un fondoir à 80°C puis coulé dans l'ouverture du U formée par le joint PVC, entre le feuillard d'aluminium et le filin silicone. Après remplissage, le montage est placé dans une étuve ventilée pendant 24h à 120°C. A l'issue de ce traitement, les serre-joints sont défaits et les plaques d'acier, le film silicone et le joint PVC retirés. Le matériau supramoléculaire cuit se détache facilement du film silicone et du joint PVC, en revanche il adhère fortement au feuillard d'aluminium. On obtient ainsi une structure bicouche composée d'une couche de 2.5 mm de matériau supramoléculaire accolée à une couche d'aluminium de 0.5 mm d'épaisseur.

### Exemple 4: Réalisation d'une structure bicouche aluminium / matériau supramoléculaire obtenu à partir du précurseur de l'exemple 2

On procède comme à l'exemple 3 en remplaçant le précurseur par celui obtenu à l'exemple 2 et en plaçant le montage après remplissage dans une étuve ventilée pendant 48 h à 120°C. On obtient ainsi une structure bicouche composée d'une couche de 2.5 mm de matériau supramoléculaire accolée à une couche d'aluminium de 0.5 mm d'épaisseur.

### Exemple 5 : Réalisation d'une structure sandwich tricouche aluminium / matériau supramoléculaire obtenu à partir du précurseur de l'exemple 1 / aluminium

On procède comme à l'exemple 3 en remplaçant le film silicone par un feuillard d'aluminium de mêmes longueur et largeur et d'épaisseur 0.5 mm. Le précurseur obtenu à l'exemple 1 est placé dans un fondoir à 80°C puis coulé dans l'ouverture du U formée par le joint PVC, entre les deux feuillards d'aluminium. Après remplissage, le montage est placé dans une étuve ventilée pendant 24h à 120°C. A l'issue de ce traitement, les serre-joints sont défaits et les plaques d'acier et le joint PVC retirés. Le matériau supramoléculaire cuit adhère fortement aux deux feuillards d'aluminium. On obtient ainsi une structure sandwich tricouche, composée d'une couche de 2.5 mm de matériau supramoléculaire entre deux couches d'aluminium de 0.5 mm d'épaisseur.

### Exemple 6: Réalisation d'une structure sandwich tricouche aluminium / matériau supramoléculaire obtenu à partir du précurseur de l'exemple 2/ aluminium

On procède comme à l'exemple 5 en remplaçant le précurseur par celui obtenu à l'exemple 2 et en plaçant le montage après remplissage dans une étuve ventilée pendant 48 h à 120°C. On obtient ainsi une structure sandwich tricouche, composée d'une couche de 2.5 mm de matériau supramoléculaire entre deux couches d'aluminium de 0.5 mm d'épaisseur.

### Exemple 7 : Réalisation d'une structure sandwich tricouche bois / matériau supramoléculaire / bois

Deux plaques de bois contreplaqué de 5 mm d'épaisseur sont maintenues espacées par un joint en PVC disposé en forme de U. Ce montage est maintenu serré par des serre-joints, puis préchauffé en étuve à 80°C pendant 20 mn. Le montage est sorti de l'étuve, maintenu dans la position du U vertical, et avec l'aide d'un fondoir dont la cuve est chauffée à 80°C et la buse à 100°C, on coule dans l'ouverture du U le précurseur obtenu à l'exemple 2. Le montage est ensuite placé en étuve à 120°C pendant 48 heures. A l'issue de ce traitement, les serre-joints sont enlevés. On obtient ainsi une structure sandwich tricouche, composée d'une couche de 4 mm de matériau supramoléculaire entre deux couches de bois contreplaqué de 0.5 mm d'épaisseur. La figure 2 illustre une vue latérale de la structure.

### Exemple 8 : Réalisation de structures sandwich tricouches matériau rigide / matériau supramoléculaire en couche mince / matériau rigide. Test de tenue en cisaillement

On prépare différentes structures tricouches, formées par une couche interne en matériau indiqué dans la première colonne du Tableau 1, prise en sandwich entre deux couches externes en matériau indiqué dans la première ligne du tableau I.

Afin de tester en cisaillement ces structures, elles sont assemblées de sorte à former des éprouvettes conformes à la nonne NF-EN ISO 9964. Des languettes de dimensions l=20 x L=50 x e=2 mm sont découpées dans les différents matériaux listés dans la première ligne du tableau I. On applique à l'extrémité de certaines languettes 50 mg du précurseur de polymère des exemples 1 et 2 ou de l'une des colles indiquées dans la première colonne du tableau I sur une surface délimitée par toute la largeur de l'éprouvette et une longueur de 15,6 mm. La surface ainsi couverte est de 312.5 mm², ce qui correspond à une couche d'épaisseur d'environ 150 à 160 microns. Lorsque le précurseur de l'exemple 1 ou 2 est utilisé, il est préalablement préchauffé à 80°C avant son application par coulée. On applique ensuite sur la couche ainsi formée une deuxième languette du même matériau que la première languette, cette deuxième languette étant orientée à 180° par rapport à la première, de manière à obtenir une éprouvette de mesure de tenue en cisaillement selon la norme NF-EN ISO 9964 précitée.

Les éprouvettes comportant les précurseurs des exemples 1 et 2 sont soumises à une cuisson au four de 24 h à 120°C, retirées du four puis conditionnées 24 heures à 21°C sous une humidité relative de 50%.

Un test en traction est ensuite effectué avec une machine Instron modèle 5565 et un capteur de 5 kN. La vitesse de traction est de 10 mm/mn. Les forces de cohésion mesurées sont reportées dans le tableau I ci-dessous pour les diverses éprouvettes. Les valeurs obtenues avec les structures selon l'invention sont ainsi comparées à celles comportant comme couche interne une colle commerciale. Les structures de l'invention démontrent un bon compromis en termes de cohésion et de souplesse de la couche interne en matériau supramoléculaire.

**Tableau I**

| Force à rupture (N) | Bois de sapin | Bois contreplaqué 3 mm | Acier | Inox | PMMA |
|---|---|---|---|---|---|
| Colle à bois⁽¹⁾ | 850 | 1100 | | | |
| Colle souple⁽²⁾ | 130 | 160 | 35 | 40 | |
| Colle souple⁽³⁾ | 100 | 350 | 15 | 40 | |
| Polymère ex 1 | 130 | | 55 | 80 | 530 |
| Polymère ex 2 | | 550 | 170 | 400 | 320 |

| | | | | | |
|---|---|---|---|---|---|
| (1) : colle blanche vinylique de marque Sader (2) : Colle néoprène contact liquide de marque Sader (3) : Colle silicone Sporlit® spéciale caoutchoucs et plastiques, Henkel | | | | | |

### Exemple 9 : Test de pelage

On effectue un test de pelage, selon la norme ASTDM D429-B, de la structure sandwich de l'exemple 5. On réalise pour cela des éprouvettes en tranchant cette dernière suivant un plan perpendiculaire à ses faces de plus grandes dimensions. On place des mors de part et d'autre des faces externes de l'éprouvette, sur les faces des feuillards d'aluminium qui ne sont pas en contact avec le matériau supramoléculaire. On obtient une force de rupture de 3.1 N/mm avec un faciès de rupture 40% cohésif. Autrement dit, dans 40% des cas, la rupture se produit dans la couche de matériau supramoléculaire et non à ses interfaces avec les couches d'aluminium, ce qui démontre une adhésion satisfaisante.

### Exemple 10 : Test de pelage de la structure sandwich de l'exemple 6

On effectue un test de pelage, selon la norme ASTDM D429-B, de la structure sandwich de l'exemple 6 en procédant comme à l'exemple 7. On obtient une force de rupture de 3.1 N/mm avec un faciès de rupture 20% cohésif.

### Exemple 11 : Test de tenue au cisaillement et de cicatrisation d'une structure sandwich bois / matériau supramoléculaire / bois

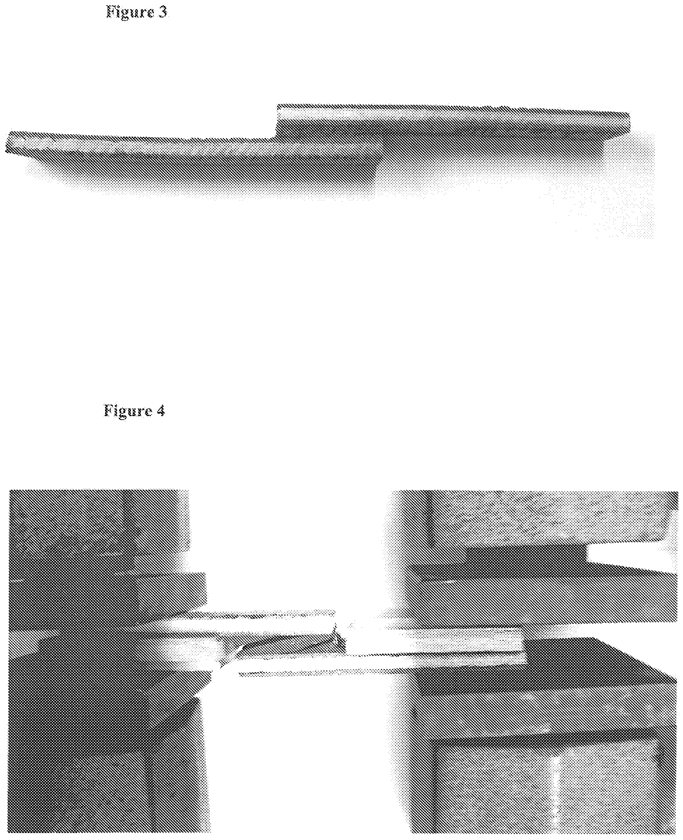

On procède comme à l'exemple 7 pour couler entre deux plaques de bois contreplaqué le précurseur de matériau supramoléculaire obtenu à l'exemple 2. On utilise un joint de diamètre 3 mm. Après cuisson 48 h à 120°C de l'ensemble, la structure est découpée en bandes de 14 mm de largeur, et les morceaux de contreplaqués redécoupés de manière à obtenir des éprouvettes de cisaillement telles qu'illustrées à la figure 3. Les 8 éprouvettes obtenues présentent des épaisseurs de couche de matériau supramoléculaire allant de 2.3 à 3 mm. Des cales sont collées de part et d'autre des couches de bois pour permettre l'alignement des mors de la machine de traction. Les éprouvettes sont conditionnées 24 h à 23°C et 50% d'humidité relative avant d'être soumises à des essais de traction selon la norme DIN EN 1465. Pour chacune des éprouvettes, on observe une rupture cohésive, c'est-à-dire une rupture à l'intérieur de la couche de matériau supramoléculaire et non à l'interface entre ce matériau et les plaques de bois contreplaqué, comme illustré à la figure 4.

Pour les 8 éprouvettes ainsi testées, on obtient des allongements à rupture de des structures de 26 % (écart type 3.3%), et des contraintes à rupture de 0,4 MPa (écart-type 0,2 MPa).

Après rupture, les faces rompues des éprouvettes sont replacées face à face et laissées ainsi pendant une semaine. A l'issue de cette période, un nouveau test de traction est effectué. On obtient des allongements à rupture des structures de 23 % (écart type 1%), et des contraintes à rupture de 0,29 MPa (écart-type 0,04 MPa). Ainsi, après cicatrisation, environ 88% de l'allongement à rupture et 72% de la contrainte à rupture ont été restaurés.

### Exemple 12: Test de tenue au cisaillement et de cicatrisation d'une structure sandwich métal /matériau supramoléculaire /métal

On procède comme à l'exemple 11 mais en coulant le précurseur de l'exemple 1 ou 2 entre deux plaques métalliques identiques choisies parmi des plaques d'acier inox de 2 mm d'épaisseur, des plaques d'aluminium de 2 mm d'épaisseur, et des plaque d'alumine de 4 mm d'épaisseur, de dimensions 1=20 cm x L=20 cm. On utilise des joints de diamètres 2, 3, et 4 mm. Lorsqu'on utilise le précurseur de l'exemple 1, les assemblages sont cuits 24 h à 120°C et lorsqu'on utilise le précurseur de l'exemple 2, les assemblages sont cuits 48 h à 125°C. Les résultats des tests de traction avant et après cicatrisation sont reportés dans le tableau II.

**Tableau II**

| Matériau rigide | Matériau supramoléculaire (ex 1 ou 2) | Epaisseur de la couche de matériau supramoléculaire (mm) | Résistance à rupture (MPa) | Allongement à rupture (%) | Résistance à rupture, après cicatrisation (MPa) | Allongement à rupture, après cicatrisation (%) |
|---|---|---|---|---|---|---|
| Inox | 2 | 2.8 | 0.6 | 25.5 | 0.4 | 20 |
| Aluminium | 2 | 2.8 | 0.55 | 28 | 0.41 | 21 |
| Alumine | 2 | 2.8 | 0.48 | 24.8 | 0.38 | 20.9 |
| Inox | 1 | 2.8 | 2.4 | 20 | 1.8 | 18 |
| Aluminium | 1 | 2.8 | 2.1 | 19 | 1.6 | 15 |
| Alumine | 1 | 2.8 | 2.35 | 18.5 | 2.0 | 14.3 |
| Aluminium | 2 | 4 | 0.51 | 35 | 0.4 | 26 |
| Aluminium | 2 | 1.7 | 0.48 | 16 | 0.33 | 13 |

## Revendications

1. Utilisation d'une structure multicouche ou d'un objet comportant au moins une structure multicouche, pour amortir des chocs, des vibrations et/ou des ondes sonores, ladite structure multicouche comportant au moins deux couches contigües, dites première et deuxième couches, la première couche comprenant au moins un matériau rigide et la deuxième couche comprenant au moins un matériau supramoléculaire ayant une bonne adhérence à la couche comprenant le matériau rigide, et ladite structure multicouche étant obtenue selon un procédé comprenant au moins les étapes suivantes :
(i) une étape de coulage d'une composition comprenant au moins un précurseur de matériau supramoléculaire, au contact d'une couche comprenant au moins un matériau rigide, pour former ensemble deux couches contigües,
ledit précurseur étant obtenu par au moins les étapes successives suivantes :
(a) la réaction d'au moins un composé au moins trifonctionnel (A) choisi parmi les trimères ou les mélanges de trimères et dimères d'acides gras d'origine végétale, avec au moins un composé (B) portant, d'une part, au moins un groupe réactif susceptible de réagir avec les fonctions réactives de (A) et, d'autre part, au moins un groupe associatif choisi parmi les groupes imidazolidonyle, triazolyle, triazinyle, bis-uréyle, uréido-pyrimidyle,
(b) le mélange du ou des composé(s) obtenu(s) à l'étape (a) avec au moins un composé au moins difonctionnel (C), dont les fonctions réactives sont susceptibles de réagir avec les fonctions réactives du composé (A) au cours de l'étape de cuisson (ii), pour former des ponts ester ou thioester, seuls ou en combinaison avec des ponts amide ou urée.
ledit matériau rigide étant choisi parmi le verre, le bois, les métaux ou leurs alliages, les céramiques, les polymères thermoplastiques polaires, chargés ou non, les résines thermodurcissables, les bétons, les mortiers, les plâtres, et
(ii) une étape de cuisson effectuée de sorte à convertir ledit précurseur en matériau supramoléculaire présentant une tangente Delta supérieure à 0,5, sur une plage de température large de 30°C au moins, telle que mesurée par analyse thermomécanique dynamique.

2. Utilisation selon la revendication 1, **caractérisée en ce que** le composé (A) est un trimère de l'un au moins des acides suivants : l'acide undécylénique, l'acide myristoléique, l'acide palmitoléique, l'acide oléique, l'acide linoléique, l'acide linolénique, l'acide ricinoléique, l'acide eicosénoïque, l'acide docosénoïque, l'acide eicosapentaénoïque et l'acide docosahexaénoïque.

3. Utilisation selon l'une des revendications 1 ou 2, **caractérisée en ce que** le composé (B) porte au moins un groupe réactif choisi parmi les groupes amine primaire ou secondaire ou alcool, étant avantageusement choisi parmi les groupes amine primaire ou secondaire.

4. Utilisation selon l'une quelconque des revendications 1 à 3, **caractérisée en ce que** le composé (B) répond à l'une quelconque des formules (B1) à (B3) : 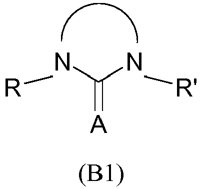 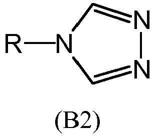 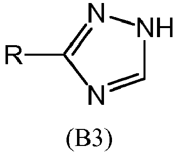 où :
R désigne un motif contenant au moins un groupe amine primaire ou secondaire ou alcool,
R' désigne un atome d'hydrogène,
A désigne un atome d'oxygène ou de soufre ou un groupement -NH, de préférence un atome d'oxygène.

5. Utilisation selon l'une quelconque des revendications 1 à 4, **caractérisée en ce que** le composé (B) est choisi parmi la 2-aminoéthylimidazolidone (UDETA), la 1-(2-[(2-aminoéthyl)amino]éthyl)imidazolidone (UTETA), la 1-(2-{2-[(2-aminoéthylamino]éthyl}amino)éthyl]imidazolidone (UTEPA), le 3-amino-1,2,4-triazole et le 4-amino-1,2,4-triazole, étant de préférence la 2-aminoéthylimidazolidone (UDETA).

6. Utilisation selon l'une quelconque des revendications 1 à 5, **caractérisée en ce que** le composé (C) porte au moins deux fonctions, identiques ou différentes, choisies parmi les fonctions époxy, alcool et amine, étant avantageusement des fonctions époxy.

7. Utilisation selon l'une quelconque des revendications 1 à 6, **caractérisée en ce que** la composition comprenant le précurseur est coulée lors de l'étape (i) à une viscosité inférieure à 50 Pa.s, de préférence inférieure à 30 Pa.s, de préférence inférieure à 10 Pa.s, encore de préférence à une viscosité allant de 0,1 à 5 Pa.s, telle que mesurée par rhéométrie plan-plan à un cisaillement de 50s⁻¹.

8. Utilisation selon l'une quelconque des revendications 1 à 7, **caractérisée en ce que** l'étape de cuisson (ii) est mise en oeuvre à une température allant de 80°C à 180°C, de préférence de 100°C à 150°C, plus préférentiellement de 110°C à 130°C.

9. Utilisation selon l'une quelconque des revendications 1 à 8 **caractérisée en ce que** le matériau supramoléculaire présente un module de cisaillement G' allant de 1 à 500 MPa, et préférentiellement de 3 à 100 MPa.

10. Utilisation selon l'une quelconque des revendications 1 à 9 **caractérisée en ce que** la couche comprenant le matériau supramoléculaire présente au moins une portion dont l'épaisseur va de 5 µm à 20 mm, de préférence de 5 µm à 10 mm, voire de 5 à 200 µm ou même de 15 à 50 µm.

11. Utilisation selon l'une quelconque des revendications 1 à 10 **caractérisée en ce que** la structure multicouche et/ou l'objet comprenant au moins la structure multicouche entrent dans la fabrication d'engins de locomotion, tels qu'automobiles, ferroviaires, nautiques, aéronautiques ou aérospatiales, ou encore dans le domaine du bâtiment.

## Patentansprüche

1. Verwendung einer mehrschichtigen Struktur oder eines Gegenstandes mit mindestens einer mehrschichtigen Struktur zur Dämpfung von Stößen, von Schwingungen und/oder von Schallwellen, wobei diese mehrschichtige Struktur mindestens zwei aneinandergrenzende Schichten aufweist, die erste und zweite Schicht genannt werden, wobei die erste Schicht mindestens ein festes Material und die zweite Schicht mindestens ein supramolekulares Material mit einer guten Haftung an der Schicht mit dem festen Material besitzt, und wobei diese mehrschichtige Struktur nach einem Verfahren hergestellt wird, das mindestens folgende Verfahrensschritte umfasst:
(i) einen Schritt des Vergießens einer Zusammensetzung, umfassend mindestens einen Vorläufer für ein supramolekulares Material in Kontakt mit einer Schicht aus mindestens einem festen Material, die zusammen zwei aneinandergrenzende Schichten bilden,
wobei dieser Vorläufer durch mindestens folgende aufeinanderfolgende Schritte hergestellt wird:
(a) Reaktion von mindestens einer mindestens trifunktionellen Verbindung (A), die aus den Trimeren oder Trimergemischen und Dimeren von Fettsäuren pflanzlichen Ursprungs ausgewählt ist, mit mindestens einer Verbindung (B), die einerseits mindestens eine reaktive Gruppe aufweist, die mit den reaktiven Funktionen von (A) reagieren kann, und andererseits mindestens eine assoziative Gruppe aufweist, die aus den Imidazolidonyl-, Triazolyl-, Triazinyl-, Bis-Ureyl-, Ureido-Pyrimidyl-Gruppen ausgewählt ist,
(b) Mischung einer oder mehrerer Verbindung(en), hergestellt nach Schritt (a), mit mindestens einer mindestens difunktionellen Verbindung (C), deren reaktive Funktionen mit den reaktiven Funktionen von Verbindung (A) im Laufe der Brennphase (ii) reagieren können, um Ester- oder Thioesterbrücken, allein oder in Kombination mit Amid- oder Harnstoffbrücken, zu bilden,
wobei das feste Material aus Glas, Holz, Metallen oder Metalllegierungen, Keramiken, geladenen oder nicht geladenen, polaren thermoplastischen Polymeren, thermohärtbaren Harzen, Beton, Mörtel und Gips ausgewählt ist, sowie
(ii) eine Brennphase, die so ausgeführt wird, dass dieser Vorläufer in ein supramolekulares Material mit einem Tangens-Delta-Wert von über 0,5 in einem breiten Temperaturbereich von mindestens 30°C, gemessen mittels Dynamischer Thermomechanischer Analyse, umgewandelt wird.

2. Verwendung nach Anspruch 1, **dadurch gekennzeichnet, dass** die Verbindung (A) ein Trimer aus mindestens einer der folgenden Säuren ist: Undecylensäure, Myristoleinsäure, Palmitoleinsäure, Oleinsäure, Linolsäure, Linolensäure, Ricinolsäure, Eicosensäure, Docosensäure, Eicosapentaensäure und Docosahexaensäure.

3. Verwendung nach einem der vorstehenden Ansprüche 1 oder 2, **dadurch gekennzeichnet, dass** die Verbindung (B) mindestens eine reaktive Gruppe trägt, die aus den primären oder sekundären Amin-Gruppen oder Alkohol-Gruppen, vorzugsweise aus den primären oder sekundären Amin-Gruppen, ausgewählt ist.

4. Verwendung nach einem beliebigen der vorstehenden Ansprüche 1 bis 3, **dadurch gekennzeichnet, dass** die Verbindung (B) einer beliebigen der Formeln (B1) bis (B3) entspricht: 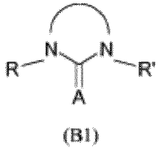 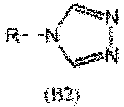 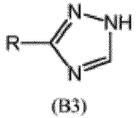 wobei:
R eine Einheit mit mindestens einer primären oder sekundären Amin-Gruppe oder Alkohol-Gruppe ist,
R' ein Wasserstoffatom ist,
A ein Sauerstoff- oder Schwefelatom oder eine -NH-Gruppe, vorzugsweise ein Sauerstoffatom, ist.

5. Verwendung nach einem beliebigen der vorstehenden Ansprüche 1 bis 4, **dadurch gekennzeichnet, dass** die Verbindung (B) aus 2-Aminoethylimidazolidon (UDETA), 1-(2-[(2-Aminoethyl) amino]ethyl-)imidazolidon (UTETA), 1-(2-{2-[(2-Aminoethylamino]ethyl}amino)ethyl]imidazolidon (UTEP A), 3-Amino-1,2,4-triazol und 4-Amino-1,2,4-triazol, vorzugsweise 2-Aminoethylimidazolidon (UDETA), ausgewählt ist.

6. Verwendung nach einem beliebigen der vorstehenden Ansprüche 1 bis 5, **dadurch gekennzeichnet, dass** die Verbindung (C) mindestens zwei gleiche oder verschiedene Funktionen trägt, die aus den Epoxy-, Alkohol- und Aminfunktionen, vorzugsweise Epoxy-Funktionen, ausgewählt sind.

7. Verwendung nach einem beliebigen der vorstehenden Ansprüche 1 bis 6, **dadurch gekennzeichnet, dass** die Zusammensetzung mit dem Vorläufer im Laufe des Schritts (i) bei einer Viskosität von weniger als 50 Pa.s, vorzugsweise weniger als 30 Pa.s, bevorzugt weniger als 10 Pa.s, oder weiter bevorzugt bei einer Viskosität zwischen 0,1 und 5 Pa.s, gemessen mittels Scherrheometer Platte/Platte bei einer Scherung von 50 s⁻¹, vergossen wird.

8. Verwendung nach einem beliebigen der vorstehenden Ansprüche 1 bis 7, **dadurch gekennzeichnet, dass** die Brennphase (ii) bei einer Temperatur von 80 °C bis 180 °C, vorzugsweise zwischen 100 °C und 150 °C, am meisten bevorzugt zwischen 110 °C und 130 °C, umgesetzt wird.

9. Verwendung nach einem beliebigen der vorstehenden Ansprüche 1 bis 8, **dadurch gekennzeichnet, dass** das supramolekulare Material ein Schermodul G' zwischen 1 und 500 MPa, vorzugsweise zwischen 3 und 100 MPa, aufweist.

10. Verwendung nach einem beliebigen der vorstehenden Ansprüche 1 bis 9, **dadurch gekennzeichnet, dass** die Schicht mit dem supramolekularen Material mindestens einen Abschnitt mit einer Dicke von 5 pm bis 20 mm, vorzugsweise von 5 pm bis 10 mm, sogar von 5 bis 200 pm oder 15 bis 50 pm, aufweist.

11. Verwendung nach einem beliebigen der vorstehenden Ansprüche 1 bis 10, **dadurch gekennzeichnet, dass** die mehrschichtige Struktur und/oder der Gegenstand mit mindestens einer mehrschichtigen Struktur bei der Fertigung von Fortbewegungsmitteln, z. B. Kraftfahrzeugen, Eisenbahnen, Wasserfahrzeugen, Luft- und Raumfahrzeugen, oder im Bauwesen eingesetzt wird/werden.

## Claims

1. Use of a multilayer structure or an object comprising at least one multilayer structure, to dampen shocks, vibrations and/or soundwaves, the said multilayer structure comprising at least two contiguous layers, called first and second layers, the first layer comprising at least one rigid material and the second layer comprising at least one supramolecular material having good adherence to the layer comprising the rigid material, and the said multilayer structure being obtained according to a method comprising at least the following steps:
(i) a step of pouring a composition comprising at least one precursor of supramolecular material in contact with a layer comprising at least one rigid material, in order to form together two contiguous layers,
the said precursor being obtained by at least the following successive steps:
(a) the reaction of at least one at least trifunctional compound (A) selected from trimers or mixtures of trimers and dimers of plant-derived fatty acids, with at least one compound (B) having, on the one hand, at least one reactive group capable of reacting with the reactive functions of (A), and on the other hand, at least one associative group selected from the groups imidazolidonyl, triazolyl, triazinyl, bis-ureyl, ureido-pyrimidyl,
(b) the mixing of the compound(s) obtained in step (a) with at least one at least difunctional compound (C), the reactive functional groups whereof are capable of reacting with the reactive functional groups of the compound (A) during the curing stage (ii), in order to form ester or thioester bridges, alone or in combination with amide or urea bridges.
the said rigid material being selected from glass, wood, metals or alloys thereof, ceramics, polar thermoplastic polymers, charged or not, thermosetting resins, concretes, mortars, plasterers, and
(ii) a curing step performed so as to convert the said precursor into supramolecular material having a Delta tangent of more than 0.5, over a broad temperature range of at least 30°C, as measured by dynamic thermomechanical analysis.

2. The use as claimed in claim 1, **characterised in that** the compound (A) is a trimer of at least one of the following acids: undecylenic acid, myristoleic acid, palmitoleic acid, oleic acid, linoleic acid, linolenic acid, ricinoleic acid, eicosenoic acid, docosenoic acid, eicosapentaenoic acid and docosahexaenoic acid.

3. The use as claimed in either of claims 1 or 2, **characterised in that** the compound (B) carries at least one reactive group chosen from primary or secondary amine groups or alcohol, advantageously being chosen from primary or secondary amine groups.

4. The use as claimed in any one of claims 1 to 3, **characterised in that** the compound (B) corresponds to any one of the formulae (B1) to (B3): 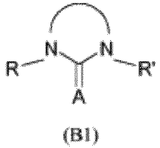 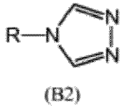 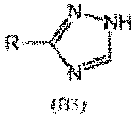 where:
R denotes a unit comprising at least one alcohol or primary or secondary amine group,
R' denotes a hydrogen atom,
A denotes an oxygen or sulfur atom or an -NH group, preferably an oxygen atom.

5. The use as claimed in any one of claims 1 to 4, **characterised in that** the compound (B) is chosen from 2-aminoethylimidazolidone (UDETA), 1-(2-[(2-aminoethyl)amino]ethyl)imidazolidone (UTETA), 1-(2-[2-{2-aminoethylamino}ethylamino]ethyl)imidazolidone (UTEPA), 3-amino-1,2,4-triazole and 4-amino-1,2,4-triazole, preferably being 2-aminoethylimidazolidone (UDETA).

6. The use as claimed in any one of claims 1 to 5, **characterised in that** the compound (C) carries at least two identical or different functional groups chosen from epoxy, alcohol and amine functional groups, advantageously being epoxy functional groups.

7. The use as claimed in any one of claims 1 to 6, **characterised in that** the composition comprising the precursor is poured during stage (i) at a viscosity of less than 50 Pa.s, preferably of less than 30 Pa.s, preferably of less than 10 Pa.s, preferably again at a viscosity ranging from 0.1 to 5 Pa.s, as measured by plate-plate rheometry at a shear rate of 50s⁻¹.

8. The use as claimed in any one of claims 1 to 7, **characterised in that** the curing stage (ii) is carried out at a temperature ranging from 80°C to 180°C, preferably from 100°C to 150°C and more preferably from 110°C to 130°C.

9. The use as claimed in any one of claims 1 to 8, **characterised in that** the supramolecular material has a shear modulus G' ranging from 1 to 500 MPa, and preferably from 3 to 100 MPa.

10. The use as claimed in any one of claims 1 to 9, **characterised in that** the layer comprising the supramolecular material has at least one portion of a thickness ranging from 5 pm to 20 mm, preferably from 5 pm to 10 mm, even from 5 to 200 pm or even from 15 to 50 pm.

11. The use as claimed in any one of claims 1 to 10, **characterised in that** the multilayer structure and/or the object comprising at least the multilayer structure are used in the manufacture of moving apparatuses such as automobiles, railroad, nautical, aeronautical or aerospace, or in the field of building construction.
